# EUROPEAN PATENT APPLICATION

(11) **EP 4 437 900 A1**
(43) Date of publication of application: **02.10.2024**
(21) Application number: 21965623.8
(22) Date of filing: 25.11.2021
(51) Int. Cl.: A44B 18/00

(54) **HOOK-AND-LOOP FASTENER MANUFACTURING METHOD AND HOOK-AND-LOOP FASTENER**

(71) Applicant: YKK CORPORATION, Chiyoda-ku Tokyo 101-8642 (JP)
(72) Inventor: YOKOYAMA, Shoichi, Kurobe-shi, Toyama 938-8601 (JP); KAWANO, Shingo, Kurobe-shi, Toyama 938-8601 (JP); MITSUHASHI, Kento, Kurobe-shi, Toyama 938-8601 (JP); NAOHARA, Masayuki, Kurobe-shi, Toyama 938-8601 (JP)
(74) Representative: Leinweber & Zimmermann
(86) International application number: PCT/JP2021/043226
(87) International publication number: WO 2023/095251

(57) **Abstract**

A method of manufacturing a surface fastener (1) according to the present invention includes a molding step of molding a pre-fastener body (40) and a stretching step of obtaining the surface fastener (1) by stretching the pre-fastener body (40) in a machine direction (MD) by a stretching device (80), the stretching device (80) including at least a first heating roller (83), a second heating roller (84), and a stretching roller (85) that heat the pre-fastener body (40), the stretching roller (85) being configured to rotate at a faster rotational speed than the second heating roller (84). The stretching step includes heating the tentative base portion (10a) of the pre-fastener body (40) with the tentative base portion (10a) being in contact with the first heating roller (83); heating engagement elements (20) of the pre-fastener body (40) with the engagement elements (20) being in contact with the second heating roller (84); and setting a heating temperature of the second heating roller (84) to be lower than a heating temperature of the first heating roller (83). Consequently, the surface fastener (1) can be manufactured while lowering of the engagement elements (20) and thinning of the base portion (10) are suppressed or prevented.

## Description

### Technical Field

The present invention relates to a surface fastener manufacturing method and a surface fastener manufactured by the manufacturing method.

### Background Art

There has been known a surface fastener product in which a female-type surface fastener (hereinafter referred to as the loop member) having a plurality of loops and a male-type surface fastener attachable and detachable with respect to the loop member are engaged with each other to be used. The male-type surface fastener includes, for example, a tabular base portion and a plurality of engagement elements each protruding from the base portion and having a form similar to a mushroom or the like.

Currently, surface fasteners are widely used in various items and often used in, for example, items such as disposable diapers, infant diaper covers, supporters for protecting joints and the like of hands and feet, waist corsets (waist belts), and gloves that are to be worn on human bodies. One example of the surface fastener used in disposable diapers and the like is disclosed in International Publication No. 2017/109902 (PTL 1).

The surface fastener described in PTL 1 includes a thin plate-shaped base portion and a plurality of engagement elements that protrude from the base portion. The engagement elements in PTL 1 each include a stem portion that stands from the base portion, and a disk-shaped engagement head portion that is integrally formed at an upper end portion of the stem portion. The engagement head portion is provided with a plurality of minute pawl portions that protrude from an outer peripheral edge portion of the engagement head portion.

With the minute pawl portions provided at the engagement head portions of the engagement elements in such a surface fastener in PTL 1, loops of loop members can be easily hooked on the engagement elements and the hooked loops are made not to be detached easily from the engagement elements. Consequently, the engagement strength (separation strength) of the surface fastener with respect to the loop members can be increased. In PTL 1, since the pawl portions, which contribute to an increase in the engagement strength, are each formed to have a minute size at the outer peripheral edge portions of the engagement head portions, an influence of the pawl portions on the tactile feel of the surface fastener can be reduced. Therefore, it is possible to provide a surface fastener that has a high engagement strength and, at the same time, has a satisfactory tactile feel of surfaces.

When such a surface fastener in PTL 1 is to be manufactured, a primary molding step is first performed. In this primary molding step, a melted thermoplastic resin is continuously extruded onto an outer peripheral surface portion of a rotating die wheel, thereby molding a primary molded body that includes a base portion and a plurality of primary elements provided on the base portion.

Next, the primary molded body having the plurality of primary elements is transported toward a heating-pressing device that performs a secondary molding step. In this secondary molding step, the primary molded body is introduced to a space between a pair of upper and lower rollers of the heating-pressing device, and upper end portions of the primary elements are thereby pressed and deformed by the upper roller. Thus, engagement elements each including an engagement head portion can be molded from the primary molded bodies. As a result of performing this secondary molding step, the surface fastener in PTL 1 is manufactured.

### Citation List

### Patent Literature

PTL 1: International Publication No. 2017/109902

### Summary of Invention

### Technical Problem

In recent years, there has been a demand for a reduction in the thickness of a portion between an upper surface (first surface) and a lower surface (second surface) of a base portion in order to reduce manufacturing costs of surface fasteners and improve flexibility of the surface fasteners. However, in a primary molding step in which the above-described die wheel is used, there is a limit in reducing the thickness of the base portion that is molded on the outer peripheral surface of the die wheel, and a further reduction in the thickness has been desired.

To reduce the thickness of the base portion, it is conceived to perform uniaxial stretching processing in which, for example, a surface fastener obtained as a result of performing the secondary molding step is delivered to a stretching device and in which, while the surface fastener is heated by the stretching device, the base portion is pulled along a machine direction (transport direction). When such uniaxial stretching processing is performed, the base portion is easily stretched in the machine direction. However, the height dimension of each engagement element from the base portion and the dimension of the base portion in an orthogonal direction (width direction) orthogonal to the machine direction are decreased to be smaller than those before the uniaxial stretching processing is performed.

The height dimension of each engagement element is controlled by a cavity shape of a metal mold used in the primary molding step and by the deformed amount (the amount of a decrease in the height dimension by pressing) of each primary element in the secondary molding step. Thus, a decrease in the height dimension of each engagement element after the uniaxial stretching processing is desired to be suppressed as much as possible. In addition, when the dimension of the base portion in the width direction is decreased, problems such as a decrease in the amount of production, an increase in manufacturing costs, and an increase in the consumption rate of materials may be caused.

The present invention has been made in consideration of the aforementioned problems, and an object of the present invention is to provide a surface fastener manufacturing method in which a base portion can be formed to be thin by performing stretching processing and in which a decrease in the height dimension of each engagement element and shrinkage of the base portion in the width direction due to the stretching processing can be suppressed or prevented, and a surface fastener that is manufactured by the manufacturing method.

### Solution to Problem

A surface fastener manufacturing method that the present invention provides to achieve the aforementioned object is a surface fastener manufacturing method in which a surface fastener made of a synthetic resin is manufactured, the surface fastener including a base portion and a plurality of engagement elements, the base portion including a first surface and a second surface disposed opposite to each other, the plurality of engagement elements protruding from the first surface of the base portion, the surface fastener manufacturing method including: a molding step of, with the synthetic resin that has melted, molding a pre-fastener body including a tentative base portion and the engagement elements; and a stretching step of obtaining the surface fastener including the base portion and the engagement elements by stretching the pre-fastener body between a second heating roller and a stretching roller in a machine direction by a stretching device and thereby deforming the tentative base portion into the base portion, the stretching device including at least three rotary rollers that are arranged in the machine direction, the rotary rollers including a first heating roller, the second heating roller, and the stretching roller that heat, while transporting the pre-fastener body, the pre-fastener body obtained in the molding step, the stretching roller being configured to rotate at a faster rotational speed than the second heating roller, the stretching step including heating the tentative base portion with a second surface of the tentative base portion of the pre-fastener body being in contact with the first heating roller, heating the engagement elements with the engagement elements of the pre-fastener body being in contact with the second heating roller, and setting a heating temperature of the second heating roller to be lower than a heating temperature of the first heating roller.

In the manufacturing method according to the present invention, preferably, the molding step includes a primary molding step of supplying the synthetic resin that has melted and molding a primary molded body that includes the tentative base portion and a plurality of primary elements protruding from a first surface of the tentative base portion, and a secondary molding step of molding, as the pre-fastener body, a secondary molded body that includes the engagement elements by pressing and deforming at least part of each of the primary elements.

In the manufacturing method according to the present invention, preferably, the stretching step includes rotating an alleviation roller provided on a downstream side of the stretching roller at a slower rotational speed than the stretching roller; bringing the engagement elements of the pre-fastener body into contact with the alleviation roller; and setting a heating temperature of the alleviation roller to be lower than or equal to a temperature that is lower by 90°C than a melting point of the synthetic resin.

In this case, preferably, the stretching step includes setting the heating temperature of the second heating roller to be less than 100°C and setting the heating temperature of the alleviation roller to be less than or equal to 80°C.

In the manufacturing method according to the present invention, preferably, the stretching step includes setting a heating temperature of the stretching roller to be higher than or equal to a temperature that is lower by 30°C than a melting point of the synthetic resin.

In this case, preferably, the stretching step includes setting the heating temperature of the second heating roller to be higher than or equal to a temperature that is lower by 100°C than the melting point of the synthetic resin and to be lower than or equal to a temperature that is lower by 70°C than the melting point of the synthetic resin.

Preferably, the stretching step includes setting the heating temperature of the second heating roller to be less than 100°C and to be lower than or equal to a temperature that is lower by 40°C than the heating temperature of the stretching roller.

Next, a surface fastener that the present invention provides is a surface fastener made of a synthetic resin and including a base portion and a plurality of engagement elements, the base portion including a first surface and a second surface disposed opposite to each other, the plurality of engagement elements protruding from the first surface of the base portion, in which the second surface of the base portion includes a low position portion and a plurality of expand portions expanding in a direction away from the first surface with respect to the low position portion, and in which the expand portions are disposed at positions on a side of the second surface, the positions corresponding to positions of the engagement elements provided at the first surface.

In the surface fastener according to the present invention, preferably, the expand portions each have a circular shape when the base portion is viewed from the side of the second surface.

Preferably, a dimension of the base portion at the low position portion in a thickness direction is more than or equal to 65% and less than or equal to 85% of a maximum value of a dimension of the base portion at the expand portions in the thickness direction.

Further, preferably, the base portion has a connection region in which the base portion and the engagement elements are connected to each other, and a formation region of the expand portions at the second surface of the base portion is provided such that, when the connection region is imaginarily disposed correspondingly on the side of the second surface of the base portion, the connection region imaginarily disposed on the side of the second surface is included in the formation region of the expand portions. Advantageous Effects of Invention

According to the present invention, it is possible to provide a surface fastener manufacturing method in which a base portion can be formed to be thin by performing stretching processing and in which a decrease in the height dimension of each engagement element and shrinkage of the base portion in the width direction due to the stretching processing can be suppressed or prevented, and a surface fastener that is manufactured by the manufacturing method.

### Brief Description of Drawings

[Fig. 1] Fig. 1 is a perspective view illustrating a surface fastener according to an example of the present invention.
[Fig. 2] Fig. 2 is a front view in which an engagement element of the surface fastener illustrated in Fig. 1 is viewed in a machine direction.
[Fig. 3] Fig. 3 is a sectional view illustrating a cross-section of the surface fastener illustrated in Fig. 1, the cross-section being orthogonal to the machine direction.
[Fig. 4] Fig. 4 is a schematic view schematically describing a manufacturing apparatus with which the surface fastener illustrated in Fig. 1 is manufactured.
[Fig. 5] Fig. 5 is a perspective view schematically illustrating an outer cylinder body and an inner cylinder body that are disposed in a molding device of the manufacturing apparatus illustrated in Fig. 4.
[Fig. 6] Fig. 6 is a schematic view schematically describing a stretching device of the manufacturing apparatus illustrated in Fig. 4.
[Fig. 7] Fig. 7 is a perspective view schematically illustrating a primary molded body molded in a primary molding step in which a molding device is used.

### Description of Embodiments

Hereinafter, a suitable embodiment of the present invention will be described in detail by presenting an example with reference to the drawings. Note that the present invention is not limited at all to the embodiment described below and that various changes can be made as long as configurations that are substantially the same as configurations in the present invention are included and similar effects are exerted. In the following example, for example, the number, sizes (thicknesses and heights), formation density, and the like of engagement elements disposed at a base portion of a surface fastener are not particularly limited and can be changed.

### [Example]

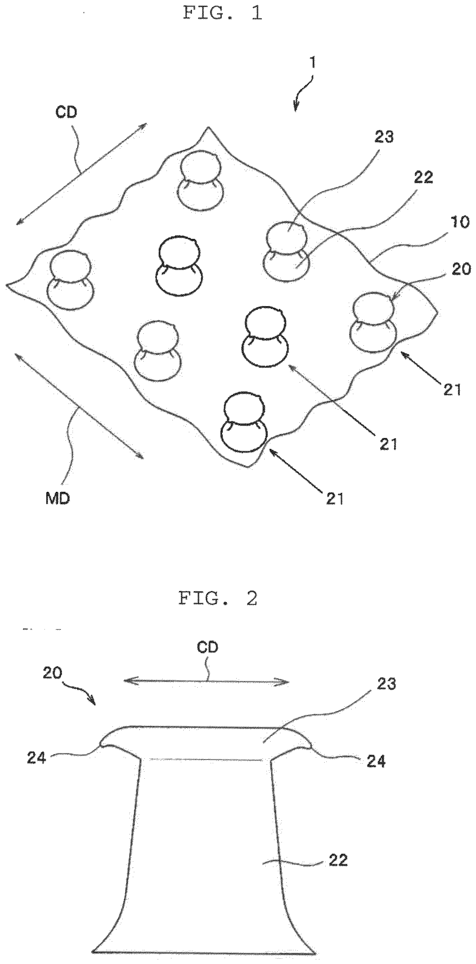

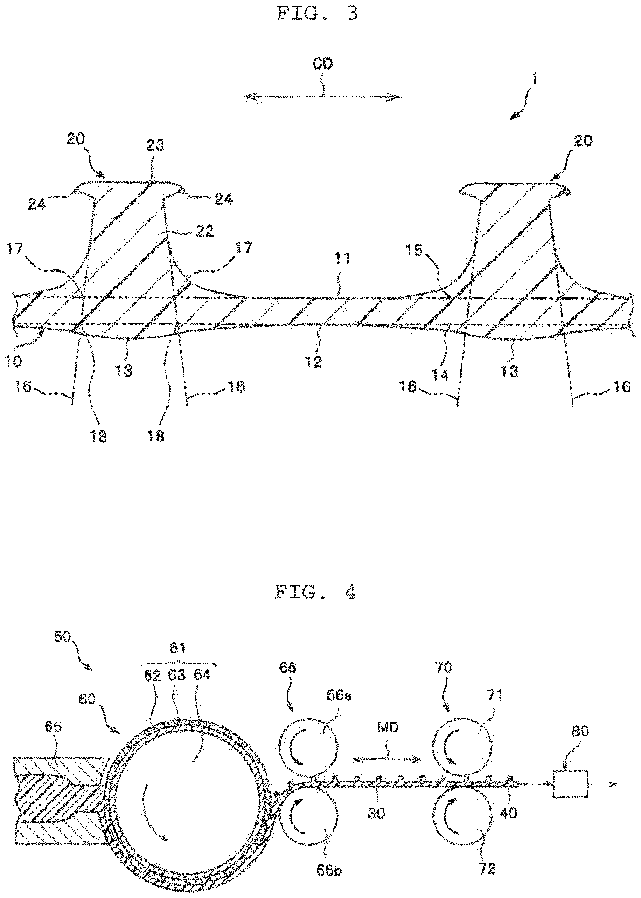

According to a surface fastener manufacturing method according to the present example, a surface fastener illustrated in Fig. 1 to Fig. 3 is manufactured. Here, Fig. 1 is a perspective view illustrating a surface fastener according to the present example. Fig. 2 is a front view in which an engagement element of the surface fastener is viewed in a machine direction. Fig. 3 is a sectional view illustrating a cross-section of the surface fastener, the cross-section being orthogonal to the machine direction.

Note that, in the following description, the front-rear direction is the length direction of each of the surface fastener, a primary molded body, and a secondary molded body that are each molded to have a long length. In addition, the front-rear direction is a direction along a machine direction (M direction or MD) in which the surface fastener, the primary molded body, or the secondary molded body is transported in a manufacturing step of the surface fastener.

The left-right direction is a width direction that is orthogonal to the length direction and that is along a flat or substantially flat upper surface (first surface) of a base portion of the surface fastener. In this case, the left-right direction and the width direction are directions along an orthogonal direction (C direction or CD) orthogonal to the machine direction. The up-down direction is a height direction (or the thickness direction of the base portion) along a direction orthogonal to the flat or substantially flat upper surface of the base portion and is a direction orthogonal to the front-rear direction and to the left-right direction. In this case, a direction toward a side where the engagement elements protrude with respect to the base portion is upward in the up-down direction, and the opposite direction thereof is downward.

First, a surface fastener 1 that is to be manufactured by the manufacturing method in the present example will be described.

The surface fastener 1 is made of a thermoplastic resin. In plan view, this surface fastener 1 is elongated in the machine direction MD of a manufacturing apparatus 50. Note that, in the present invention, the type of a synthetic resin with which the surface fastener 1 is made is not limited. As a material of the surface fastener 1, for example, a thermoplastic resin, such as polypropylene, polyester, nylon, polybutylene terephthalate, or a copolymer thereof, can be employed. For example, the surface fastener 1 in the present example is made of polypropylene. In addition, the length dimension (the dimension in the front-rear direction) and the width dimension (the dimension in the left-right direction) of the surface fastener 1 are also not particularly limited and can be changed by, for example, cutting the surface fastener 1.

The surface fastener 1 in the present example includes a thin plate-shaped base portion 10 that is elongated in the front-rear direction and a plurality of engagement elements 20 that protrude upward from the upper surface of the base portion 10. As illustrated in Fig. 3, the base portion 10 has an upper surface (first surface) and a lower surface (second surface) that is disposed opposite to the upper surface.

The upper surface of the base portion 10 in the present example is formed to be a surface that is substantially flat in a direction orthogonal to the up-down direction. Specifically, at the upper surface of the base portion 10, a plurality of recessed surface portions 11 that are each slightly curved downward into a concave shape are provided between the engagement elements 20 adjacent to each other in the front-rear direction and the left-right direction so as to be continuous with the base portion 10 and the engagement elements 20. Thus, due to the presence of the above-described plurality of shallow recessed surface portions 11, the upper surface of the base portion 10 is formed by a substantially flat surface. Note that the substantially flat surface denotes a surface that is nearly a flat surface while having minute irregularities.

In the present example, the recessed surface portions 11 of the upper surface are formed by performing stretching processing, which is described later, on the base portion 10. At the recessed surface portions 11, the upper surface of the base portion 10 and the outer peripheral surfaces of the engagement elements 20 are smoothly continuous with each other such that boundary portions therebetween are not specified clearly. Therefore, the recessed surface portions 11 include at least part of each stem portion 22, which is described later, of the engagement elements 20. In the present invention, processing conditions of the stretching processing may be changed to form the upper surface of the base portion 10 to be flat without forming the recessed surface portions 11 that are downwardly recessed or to be a surface provided with recessed surface portions that are recessed deeper than in the present example. In addition, in the present example, boundary portions that can be specified by a difference or a change in surface shape may be formed between the upper surface of the base portion 10 and the outer peripheral surfaces of the engagement elements 20. In addition, when boundary portions between the base portion and the engagement elements are clear, the recessed surface portions may be formed, without including at least part of each engagement element, by only portions that are curved into recessed shapes in a region between the boundary portions of the engagement elements adjacent to each other in the front-rear direction or the left-right direction.

The lower surface of the base portion 10 includes a low position portion 12 that is disposed close to the upper surface, and a plurality of expand portions 13 that expand with respect to the low position portion 12 in a direction (that is, downward) away from the upper surface of the base portion 10. The low position portion 12 of the lower surface is formed continuously without being disconnected in a range excluding the expand portions 13 at the lower surface. The low position portion 12 and the expand portions 13 are smoothly continuous with each other. The low position portion 12 of the base portion 10 is formed by performing stretching processing on the base portion 10 in a manufacturing step of the surface fastener 1. At the base portion 10, the low position portion 12 is provided in a range that includes portions between the engagement elements 20 adjacent to each other in the front-rear direction and portions between the engagement elements 20 adjacent to each other in the left-right direction.

With such a low position portion 12 being provided at the base portion 10, the thickness of the base portion 10 can be reduced. Consequently, it is possible to obtain effects, such as an improvement in flexibility of the surface fastener 1, a weight reduction of the surface fastener 1, an improvement in productivity, and a reduction in manufacturing costs. Further, with the low position portion 12 and the expand portions 13 being formed at the lower surface of the base portion 10, the lower surface of the base portion 10 has an irregular shape. Consequently, when the lower surface of the surface fastener 1 is fixed with a bonding agent to, for example, a member of a nonwoven fabric or a cloth material, adhesive strength for bonding the surface fastener 1 can be increased.

At the lower surface of the base portion 10, each of the expand portions 13 of the base portion 10 is provided at a protruding position of a corresponding one of the engagement elements 20 protruding at the upper surface of the base portion 10. Here, for example, when a cross-section of the surface fastener 1 parallel to the up-down direction is viewed (refer to Fig. 3) and when a lower-surface-side straight line 14 is extended so as to connect flat portions (or most recessed bottom portions) of at least two low position portions 12 provided at the lower surface of the base portion 10, the expand portions 13 are portions that each expand in an arc shape or a substantially arc shape on the lower side of the imaginary lower-surface-side straight line 14.

Each of the expand portions 13 has a circular shape in a bottom view (not illustrated) in which the surface fastener 1 is viewed from below. In this case, the circular shapes of the expand portions 13 include shapes of a perfect circle, a substantially perfect circle, an ellipse, and a substantially ellipse. Note that the substantially perfect circle and the substantially ellipse mean a shape that is nearly a perfect circle or an ellipse and that looks like a perfect circle or an ellipse. In the present example, each of the expand portions 13 has an elliptical shape or a substantially elliptical shape elongated in the machine direction MD in bottom view.

Here, a portion at which the base portion 10 and the engagement elements 20 are connected to each other on the upper surface side of the base portion 10 is referred to as, for example, a connection region. In this case, for example, when an imaginary upper-surface-side straight line 15 is extended in a sectional view (refer to Fig. 3) indicating a cross-section of the surface fastener 1 parallel to the up-down direction so as to connect two positions (specifically, the positions of the bottom surfaces of the recessed surface portions 11) at the upper surface of the base portion 10, the two positions being disposed with one engagement element 20 interposed therebetween, the connection region is a region of a line segment of the upper-surface-side straight line 15 interposed between the two positions of the upper surface. Preferably, the upper-surface-side straight line 15 is extended in the direction orthogonal to the up-down direction.

In this case, a formation region of the expand portions 13 is provided such that, when the connection region of the base portion 10 and the engagement elements 20 is imaginarily disposed on the lower surface side of the base portion 10 correspondingly, the imaginary connection region on the lower surface side is included in the formation region of the expand portions 13. In other words, for example, when a cross-section of the surface fastener 1 parallel to the up-down direction is viewed (refer to Fig. 3), the positions of one end portion and the other end portion (that is, one end portion and the other end portion of the line segment of the upper-surface-side straight line 15) of the connection region of the base portion 10 and the engagement elements 20 is disposed, in the direction orthogonal to the up-down direction, between one end portion and the other end portion of expand portions 13. Note that the one end portion and the other end portion of the expand portions 13 mean one end portion and the other end portion of a line segment of the lower-surface-side straight line 14 interposed between two low position portions 12. With the expand portions 13 being thus provided, the strength of the engagement elements 20 can be easily ensured even when the base portion 10 is formed to be thin. Note that, in the surface fastener according to the present invention, the above-described connection region between the base portion and the engagement elements may be formed to have a shape that is not possible to be specified from a sectional view of the surface fastener.

In the present example, when a cross-section of the surface fastener 1 parallel to the up-down direction thereof is viewed (refer to Fig. 3) and when a stem imaginary line 16 is extended downward along the outer peripheral surface of the stem portion 22 from a connection position of the stem portion 22 and an engagement head portion 23 of each engagement element 20, an intersection point 17 of the stem imaginary line 16 and the upper-surface-side straight line 15 is included in the formation region of the expand portions 13. Further, an intersection point 18 of the stem imaginary line 16 and the lower-surface-side straight line 14 is included in the formation region of the expand portions 13 in the present example. By confirming the above-described relationship between the connection region and the formation region of the expand portions 13 or relationship between the intersection point 17 or 18 of the stem imaginary line 16 and the formation region of the expand portions 13 in a sectional view of the surface fastener 1, it is possible to confirm that the lower surface of the base portion 10 is stretched actively in the manufacturing step, which is described later. As a result, it is possible to confirm from the manufactured surface fastener 1 that a decrease in the height dimension of each engagement element 20 and a decrease in the width dimension of the base portion 10 due to the stretching are suppressed or prevented.

The base portion 10 in the present example is formed such that the thickness dimension (dimension in the up-down direction) of the low position portion 12 is more than or equal to 65% and less than or equal to 85% of the maximum value of the thickness dimension of each expand portion 13. The thickness dimension of the low position portion 12 is a dimension between the upper-surface-side straight line 15 and the lower-surface-side straight line 14, which are described above, in the up-down direction. The thickness dimension of each expand portion 13 is a dimension from the above-described upper-surface-side straight line 15 to the lower surface of the expand portion 13 in the up-down direction. The thickness dimension of each of the low position portion 12 and the expand portions 13 can be measured by, for example, cutting the surface fastener 1 in the front-rear direction or the left-right direction and imaging each of the low position portion 12 and the expand portions 13 in the cut section by using a digital microscope.

Due to the thickness dimension of the low position portion 12 being more than or equal to 65% of the maximum value of the thickness dimension of each expand portion 13 in the present example, it is possible to appropriately ensure the base portion 10 to have a strength with which the base portion 10 is durable with use of the surface fastener 1. In addition, due to the thickness dimension of the low position portion 12 being lower than or equal to 85% of the maximum value of the thickness dimension of each expand portion 13, it is possible to increase flexibility of the base portion 10 and achieve a weight reduction of the surface fastener 1. Further, a difference between the thickness dimension of the low position portion 12 and the thickness dimension of each expand portion 13 is preferably more than or equal to 40 µm and less than or equal to 80 µm, in particular, more than or equal to 50 µm and less than or equal to 70 µm.

The plurality of engagement elements 20 are provided at the upper surface of the base portion 10 to be regularly aligned in an arrangement pattern having a zigzag form. Specifically, the engagement elements 20 are arranged at a constant pitch (interval) in the front-rear direction and thereby form an engagement element row 21. In addition, a plurality of the engagement element rows 21 are arranged at a constant interval in the left-right direction. Further, the engagement elements 20 are arranged alternately or in a zigzag form such that the positions of the engagement elements 20 in one engagement element row 21 are displaced in the front-rear direction by a size of 1/2 pitch from the positions of the engagement elements 20 in another engagement element row 21 adjacent to the one engagement element row 21 in the left-right direction. Note that the arrangement of the engagement elements 20 is not particularly limited in the present invention. For example, the plurality of engagement elements 20 may be aligned in a lattice-shaped arrangement pattern in which the engagement elements 20 are aligned in the front-rear direction and the left-right direction and may be arranged randomly.

Each of the engagement elements 20 includes the substantially truncated conical stem portion 22 standing from the base portion 10; the disk-shaped or dish-shaped engagement head portion 23 formed integrally with the upper end portion of the stem portion 22; and two minute engagement pawl portions 24 protruding outward from an outer peripheral edge portion of the engagement head portion 23. Note that, although the shapes of the engagement elements 20 are not limited in the present invention, each of the engagement element 20 preferably includes the stem portion 22 protruding in a substantially truncated conical shape from the base portion 10, and at least one minute engagement pawl portion 24 protruding outward in a radiation direction (radial direction) in plan view of the engagement elements 20 from above.

Next, the manufacturing apparatus 50 with which the surface fastener 1 such as that described above is manufactured will be described with reference to Fig. 4 to Fig. 6.

The manufacturing apparatus 50 in the present example includes a molding device 60 that performs primary molding; a heating-pressing device 70 that performs secondary molding with respect to a primary molded body 30 molded by the molding device 60 and molds a secondary molded body (pre-fastener body) 40; and a stretching device 80 that performs the stretching processing on the obtained secondary molded body (pre-fastener body) 40. In the present invention, the pre-fastener body means a molded body or a member before being subjected to the stretching processing when the stretching processing is to be performed to manufacture the surface fastener 1.

The molding device 60 includes a die wheel 61 that is driven to rotate in one direction (the counter-clockwise direction in the drawings); a supply nozzle 65 disposed to face the peripheral surface of the die wheel 61 and through which a melted synthetic resin material is continuously extruded (or caused to flow out); and a pickup roller 66 disposed on the downstream side with respect to the supply nozzle 65 in the rotation direction of the die wheel 61.

The die wheel 61 includes a cylindrical outer cylinder body (outer sleeve) 62 that serves as a metal mold; a cylindrical inner cylinder body (inner sleeve) 63 that is disposed in close contact with the inner side of the outer cylinder body 62; and a rotation drive roller 64 that rotates the outer cylinder body 62 and the inner cylinder body 63 in one direction. A cooling jacket, not illustrated, in which a cooling liquid circulates is provided inside the rotation drive roller 64.

In the outer cylinder body 62, a plurality of through holes 62a extending from the outer peripheral surface to the inner peripheral surface of the outer cylinder body 62 are formed as cavities for molding primary stem portions 32, which are described later, of the primary molded body 30. The formation positions of the plurality of through holes 62a correspond to the positions at which the engagement elements 20 are disposed at the secondary molded body 40 that is to be produced. Each of the through holes 62a has a substantially truncated conical shape with which the circular shape thereof at the outer peripheral surface of the outer cylinder body 62 is formed to be larger than the circular shape thereof at the inner peripheral surface of the outer cylinder body 62.

The outer peripheral surface of the inner cylinder body 63 has a plurality of recessed groove portions 63a. Each recessed groove portion 63a is provided to be recessed in a linear shape extending in a direction (orthogonal direction CD) parallel to the center axis of the inner cylinder body 63 and to have a size with which the melted synthetic resin can flows into the recessed groove portion 63a. The recessed groove portions 63a are formed at a constant interval in the circumferential direction (machine direction MD) of the inner cylinder body 63. At least part of each of the recessed groove portions 63a of the inner cylinder body 63 is provided to intersect, when the die wheel 61 is assembled, the outer peripheral edges of the through holes 62a formed in the inner peripheral surface of the outer cylinder body 62.

The pickup roller 66 includes a pair of an upper-side nipping roller 66a and a lower-side nipping roller 66b that nip and pull the primary molded body 30, which has been molded at an outer peripheral surface portion of the die wheel 61, from above and below. Outer peripheral surface portions of the upper-side nipping roller 66a and the lower-side nipping roller 66b are each provided with a surface layer, which is not illustrated, made of an elastomer, such as a polyurethane elastomer.

The heating-pressing device 70 includes a pair of upper and lower pressing rollers (calender rollers) 71 and 72 that are disposed on the downstream side of the pickup roller 66. The upper-side pressing roller 71 and the lower-side pressing roller 72 are disposed to face each other with a predetermined interval therebetween. The interval between the upper-side pressing roller 71 and the lower-side pressing roller 72 is adjustable by a height adjusting means, which is not illustrated.

The upper-side pressing roller 71 includes a heating source, which is not illustrated, in the inside thereof, and the surface temperature of the upper-side pressing roller 71 is set to a temperature with which the synthetic resin that forms the surface fastener 1 (the primary molded body 30) can be softened. Note that the structure of the heating-pressing device 70 is not particularly limited in the present invention as long as, as described later, the heating-pressing device 70 can press at least part of the primary molded body 30 and form the engagement elements 20.

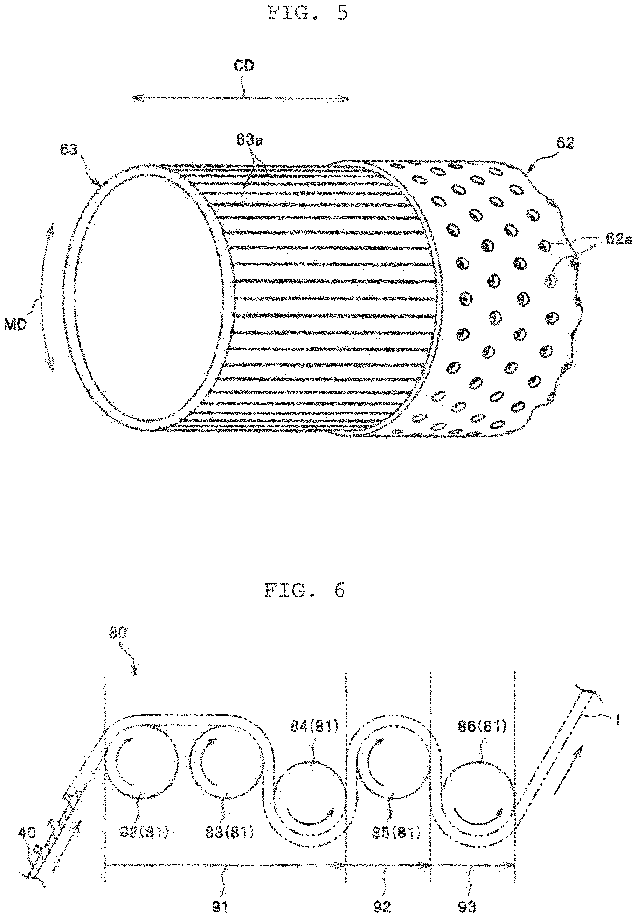

As illustrated in Fig. 4, the stretching device 80 is set on the downstream side of the heating-pressing device 70 to perform the stretching processing on the secondary molded body 40 molded at the heating-pressing device 70. As illustrated in Fig. 6, this stretching device 80 includes a supply portion, which is not illustrated, that introduces the secondary molded body 40 molded at the heating-pressing device 70 into the stretching device 80; a discharge portion, which is not illustrated, that delivers the surface fastener 1, which is formed by being subjected to the stretching processing, to the downstream side; and a plurality of rotary rollers 81 that are disposed, between the supply portion and the discharge portion, along a transport path of the secondary molded body 40.

The rotary rollers 81 are formed to be able to rotate while being in contact with the secondary molded body 40 to thereby transport the secondary molded body 40 toward the downstream side at a speed corresponding to the speed of the rotation thereof. In addition, a heating temperature of each of the rotary rollers 81 is set by a controller, which is not illustrated, and the rotary rollers 81 can heat the secondary molded body 40 at the heating temperature by coming into contact with the secondary molded body 40.

The rotary rollers 81 in the present example include a preheating roller 82, a first heating roller 83, and a second heating roller 84 that heat the secondary molded body 40; a stretching roller 85 that is disposed on the downstream side of the second heating roller 84 and that performs the stretching processing on the secondary molded body 40 between the second heating roller 84 and the stretching roller 85; and an alleviation roller 86 that is disposed on the downstream side of the stretching roller 85. The preheating roller 82, the first heating roller 83, the second heating roller 84, the stretching roller 85, and the alleviation roller 86 are set along the transport path of the secondary molded body 40 sequentially from the supply portion (on the upstream side) toward the discharge portion (on the downstream side) of the stretching device 80.

The preheating roller 82, the first heating roller 83, and the stretching roller 85 are rotatably set on the lower side of the transport path of the secondary molded body 40 so as to come into direct contact with a tentative base portion 10a, which is described later, of the secondary molded body 40 from the lower surface (back surface) side of the tentative base portion 10a. In other words, before the stretching processing is performed by the stretching roller 85, the front side (the engagement elements 20 side) and the back side (the side of the surface that does not have the engagement elements 20) of the secondary molded body 40 are heated mainly by the first heating roller 83 and the second heating roller 84, respectively. The preheating roller 82 positioned on the upstream side of the first heating roller 83 heats the secondary molded body 40 preliminarily. In the stretching processing, stretching is performed with the lower surface side of the tentative base portion 10a being in contact with the stretching roller 85 to suppress or prevent deformation of the shapes of the engagement elements 20. Thus, the lower surface side of the tentative base portion 10a is required to be preliminarily heated so as to be easily stretched. Therefore, the preheating roller 82 performs preliminary heating while being in contact with the lower surface side of the tentative base portion 10a. The second heating roller 84 and the alleviation roller 86 are rotatably set on the upper side of the transport path of the secondary molded body 40 so as to come into direct contact with the secondary molded body 40 from the engagement elements 20 side. In addition, the second heating roller 84 and the alleviation roller 86 are set on the lower side in the vertical direction with respect to the set positions of the preheating roller 82, the first heating roller 83, and the stretching roller 85 such that the transport path of the secondary molded body 40 meanders vertically inside the stretching device 80. Note that it is not necessary for the alleviation roller 86 to be disposed directly after the stretching roller 85 as long as the alleviation roller 86 is positioned on the downstream side of the stretching roller 85. When the alleviation roller 86 is not disposed directly after the stretching roller 85, the alleviation roller 86 may come into direct contact with the secondary molded body 40 from the lower surface side of the tentative base portion 10a.

The preheating roller 82 and the first heating roller 83 come into contact with the lower surface of the tentative base portion 10a of the secondary molded body 40 and rotate, thereby transporting the secondary molded body 40 and heating the secondary molded body 40 from the tentative base portion 10a side. In the present example, the preheating roller 82 and the first heating roller 83 are controlled to rotate at rotational speeds identical to each other and heat the secondary molded body 40 at the same heating temperature. In the present example, the heating temperature of the preheating roller 82 may be set to a temperature lower than the heating temperature of the first heating roller 83 to gradually heat the lower surface of the tentative base portion 10a. Here, the heating temperature of each of the rotary rollers 81 is a temperature at a roller surface (outer peripheral surface) of each of the rotary rollers 81 heated by a heat source. In the preliminary heating, other than the method in which the secondary molded body 40 is brought into direct contact with the heated rollers, for example, heating means, such as heated air or irradiation with infrared light, can be used.

In the stretching device 80 in the present example, one preheating roller 82 is set on the upstream side of the first heating roller 83. The stretching device in the present invention, however, may be formed without provision of the preheating roller or may be formed with a plurality of preheating rollers on the upstream side of the first heating roller.

The second heating roller 84 rotates while being in contact with the engagement elements 20 of the secondary molded body 40, thereby transporting the secondary molded body 40 and heating the secondary molded body 40 from the engagement elements 20 side. In the present example, the second heating roller 84 is controlled to rotate at the same rotational speed as the first heating roller 83. It is possible by, as in the present example, rotating the preheating roller 82, the first heating roller 83, and the second heating roller 84 at the same rotational speed to transport the secondary molded body 40 from the supply portion of the stretching device 80 to the second heating roller 84 while heating the secondary molded body 40 without causing stretching in the secondary molded body 40.

The heating temperature of the second heating roller 84 is set to be lower than the heating temperature of the first heating roller 83. Further, in the present example, the heating temperature of the second heating roller 84 is set to be less than 100°C. By setting the heating temperature of the second heating roller 84 to be lower than the heating temperature of the first heating roller 83, it is possible to appropriately provide a temperature difference in the up-down direction in the secondary molded body 40 before the secondary molded body 40 is stretched between the second heating roller 84 and the stretching roller 85. In other words, with respect to the secondary molded body 40 that passes through the second heating roller 84, a temperature difference can be provided between the lower surface of the tentative base portion 10a and the upper end portions of the engagement elements 20 by causing the temperature of the lower surface of the tentative base portion 10a to be highest and causing the temperature of the engagement elements 20 to be low. Further, it is possible in the present example to provide a temperature difference also between the lower surface and the upper surface of the tentative base portion 10a. As a result, it is possible, as described later, to suppress or prevent a decrease in the height dimension of each of the engagement elements 20 and a decrease in the width dimension of the base portion 10 in the stretching processing performed by the stretching device 80.

The stretching roller 85 rotates while being in contact with the lower surface of the tentative base portion 10a of the secondary molded body 40, thereby transporting the secondary molded body 40 and heating the secondary molded body 40 from the tentative base portion 10a side. The stretching roller 85 is controlled to rotate at a faster rotational speed than the second heating roller 84. For example, the rotational speed of the stretching roller 85 is set in the present example to a speed that is more than or equal to 110% and less than or equal to 200%, preferably, more than or equal to 140% and less than or equal to 170% with respect to the rotational speed of the second heating roller 84. Consequently, the stretching processing can be performed between the second heating roller 84 and the stretching roller 85 with respect to the secondary molded body 40. The second heating roller 84 is a nip roll. Since the secondary molded body 40 is pulled by the stretching roller 85 whose rotational speed is fast, the use of the nip roll as the second heating roller 84 can prevent sliding on the second heating roller 84 from occurring and causing the stretching processing to be insufficient.

The heating temperature of the stretching roller 85 is set to be higher than or equal to a temperature that is lower by 30°C than a melting point of the synthetic resin that forms the surface fastener 1 (secondary molded body 40) and to be lower than the melting point of the synthetic resin. Preferably, the heating temperature of the stretching roller 85 is set to be lower than or equal to a temperature that is lower by 15°C than the melting point of the synthetic resin. For example, in the present example in which the surface fastener 1 is made of polypropylene, the melting point of the polypropylene is 160°C to 170°C, and the heating temperature of the stretching roller 85 is thus preferably set to be in the range from 130°C to 155°C. By setting the heating temperature to be higher than or equal to the temperature that is lower by 30°C than the melting point of the synthetic resin, the secondary molded body 40 is softened and easily adheres to the surface of the stretching roller 85 when the secondary molded body 40 comes into contact with the stretching roller 85, and friction resistance between the secondary molded body 40 and the stretching roller 85 can be increased. As a result, it is possible to cause shrinkage of the tentative base portion 10a in the width direction not to be generated easily when the tentative base portion 10a is stretched.

In addition, for example, when the heating temperature of the stretching roller 85 is set to be excessively close to the melting point of the synthetic resin in the stretching processing in which the tentative base portion 10a is stretched in the front-rear direction between the second heating roller 84 and the stretching roller 85, part of each of base end portions of the engagement elements 20 connected to the tentative base portion 10a deforms when the tentative base portion 10a is stretched, and the synthetic resin of the engagement elements 20 moves to the tentative base portion 10a and may thereby cause a decrease in the height dimension of each engagement element 20. In contrast, by setting the heating temperature of the stretching roller 85 to be lower than or equal to the temperature that is lower by 15°C than the melting point of the synthetic resin, it is possible to suppress excessive heating of the secondary molded body 40 at a contact position with respect to the stretching roller 85 and at a position in the vicinity thereof and possible to effectively suppress or prevent a decrease in the height dimension of each engagement element 20 due to the movement of the synthetic resin of the engagement elements 20.

In addition, the heating temperature of the second heating roller 84 is preferably set to be higher than or equal to a temperature that is lower by 100°C than the melting point of the synthetic resin that forms the surface fastener 1 (secondary molded body 40) and to be lower than or equal to a temperature that is lower by 70°C than the melting point of the synthetic resin. For example, in the present example in which the surface fastener 1 is made of polypropylene, the heating temperature of the second heating roller 84 is preferably set to be in the range from 60°C to 100°C. Further, in this case, a difference in the heating temperature between the second heating roller 84 and the stretching roller 85 is preferably set to be higher than or equal to 40°C. Due to that the difference in the heating temperature between the second heating roller 84 with which the engagement elements 20 come into contact and the stretching roller 85 with which the lower surface of the tentative base portion 10a comes into contact is higher than or equal to 40°C, it is possible not only provide a temperature difference between the lower surface of the tentative base portion 10a and the upper end portions of the engagement elements 20 but also to provide a temperature difference between the lower surface and the upper surface of the tentative base portion 10a. Consequently, the upper surface of the tentative base portion 10a does not easily deform compared with the lower surface thereof, and it is possible to cause shrinkage in the width direction not to be generated easily.

In the present example, the alleviation roller 86 is controlled to rotate at a slower rotational speed than the stretching roller 85. When the alleviation roller 86 is disposed directly after the stretching roller 85, the alleviation roller 86 transports the secondary molded body 40 (that is, the surface fastener 1) that has been subjected to stretching processing and heats the secondary molded body 40 from the engagement elements 20 side by rotating while being in contact with the engagement elements 20 of the secondary molded body 40.

For example, in the present example, the rotational speed of the alleviation roller 86 is set to a speed that is more than or equal to 80% and less than 100%, preferably, more than or equal to 90% and less than or equal to 99% with respect to the rotational speed of the stretching roller 85. Consequently, a tensile force applied between the stretching roller 85 and the alleviation roller 86 to the surface fastener 1 is weakened, and the shape (in particular, the dimension of the base portion 10 in the front-rear direction) of the surface fastener 1 can be stabilized.

In the present example, when the alleviation roller 86 comes into direct contact with the engagement elements 20 side of the secondary molded body 40, the heating temperature of the alleviation roller 86 is preferably set to be lower than or equal to a temperature that is lower by 90°C than the melting point of the synthetic resin that forms the surface fastener 1. For example, in the present example in which the surface fastener 1 is made of polypropylene, the heating temperature of the alleviation roller 86 is preferably set to be in the range from the room temperature to 80°C.

By setting the heating temperature of the alleviation roller 86 to be lower than or equal to the temperature that is lower by 90°C than the melting point of the synthetic resin, a decrease in the height dimension of each of the engagement elements 20 can be suppressed or prevented even when the alleviation roller 86 comes into contact with the surface fastener 1 from the engagement elements 20 side.

When the surface fastener 1 is to be manufactured using the manufacturing apparatus 50 including the molding device 60, the heating-pressing device 70, and the stretching device 80 described above, the primary molding step in which the primary molded body 30 is molded by the molding device 60 is first performed. In this primary molding step, the melted synthetic resin material is continuously supplied through the supply nozzle 65 toward the outer peripheral surface of the die wheel 61.

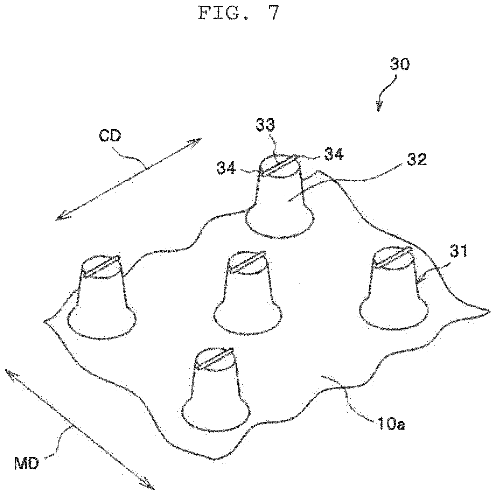

The tentative base portion 10a is thereby continuously molded between the supply nozzle 65 and the die wheel 61. The molding device 60 may be formed by, for example, a structure that supplies a melted synthetic resin material through a supply nozzle toward a gap between two die wheels that face each other. In this case, the tentative base portion 10a is formed between a pair of the die wheels. In the present example, in addition to molding the tentative base portion 10a, a plurality of primary elements (tentative elements) 31 are integrally molded at the upper surface of the tentative base portion 10a by the outer cylinder body 62 and the inner cylinder body 63 of the die wheel 61. The primary molded body 30, such as that illustrated in Fig. 7, is thereby molded.

The primary molded body 30 molded by this molding device 60 includes the thin plate-shaped tentative base portion 10a and the plurality of primary elements 31 protruding at the upper surface of the tentative base portion 10a. The upper surface and the lower surface of the tentative base portion 10a are formed to be flat surfaces. The primary elements 31 are deformed into the engagement elements 20 by being press molded in a secondary molding step. Each of the primary elements 31 includes the primary stem portion 32 having a truncated conical shape and standing from the tentative base portion 10a; a rib portion 33 having a rod shape and locally expanding upward from the upper surface of the primary stem portion 32; and two protruding portions (primary pawl portions) 34 formed integrally with the rib portion 33 and protruding on the outer side of the primary stem portion 32.

The rib portions 33 and the protruding portions 34 of the primary elements 31 are molded in the primary molding step in which the synthetic resin flows through the through holes 62a of the outer cylinder body 62 into the recessed groove portions 63a provided in the inner cylinder body 63 and further flows along the recessed groove portions 63a into portions beyond the through holes 62a. In this case, each rib portion 33 is formed to extend in a direction orthogonal to the upper surface of the primary stem portion 32. The two protruding portions 34 each protrude from a corresponding one of two end portions of the rib portion 33 toward the outer side of the primary stem portion 32.

In this primary molding step, the melted synthetic resin is half turned while being held by the outer peripheral surface of the die wheel 61 and being cooled, and the above-described primary molded body 30 is thereby molded. Thereafter, the primary molded body 30 is continuously pulled off from the outer peripheral surface of the die wheel 61 by the pickup roller 66.

Next, the primary molded body 30 that has been pulled off from the die wheel 61 is transported toward the heating-pressing device 70, which performs the secondary molding step, and is introduced into a space between the upper-side pressing roller 71 and the lower-side pressing roller 72 of the heating-pressing device 70.

In this secondary molding step, the tentative base portion 10a of the primary molded body 30 is supported from below by the lower-side pressing roller 72. In addition, at least an upper end portion of each primary element 31 of the primary molded body 30 is heated to be softened and is pressed from above by the upper-side pressing roller 71. Consequently, an upper end portion of the primary stem portion 32, the rib portion 33, and the protruding portions 34 of the primary element 31 are thermally deformed, and the engagement head portion 23 is molded. Further, from the protruding portions 34 of each of the primary elements 31, minute pawl portions are molded at the outer peripheral side surface of the engagement head portion 23. Consequently, a plurality of the engagement elements 20 each having the shape illustrated in Fig. 1 are molded on the upper surface of the tentative base portion 10a, and the secondary molded body (pre-fastener body) 40 having the plurality of engagement elements 20 is thereby manufactured.

Thereafter, the secondary molded body 40 that has been delivered from the heating-pressing device 70 is transported to the stretching device 80, which performs the stretching processing, and is introduced into the stretching device 80 from the supply portion, which is not illustrated.

In a stretching step in which the stretching processing is performed, heating processing 91 of the secondary molded body 40 is first performed by the preheating roller 82, the first heating roller 83, and the second heating roller 84 (refer to Fig. 6).

This heating processing 91 will be described specifically. First, the lower surface of the tentative base portion 10a of the secondary molded body 40 is brought into contact with the preheating roller 82 and the first heating roller 83 while the secondary molded body 40 is transported by the preheating roller 82 and the first heating roller 83. Consequently, the secondary molded body 40 is heated from the lower surface side of the tentative base portion 10a to a temperature with which the stretching processing is possible. For example, in the present example, the secondary molded body 40 made of polypropylene is heated at the tentative base portion 10a of the secondary molded body 40 by the preheating roller 82 and the first heating roller 83 at a heating temperature of more than or equal to 70°C and less than or equal to 110°C.

Next, in the heating processing 91, the secondary molded body 40 that has passed through the preheating roller 82 and the first heating roller 83 is transported toward the second heating roller 84, and the engagement elements 20 of the secondary molded body 40 are brought into contact with the second heating roller 84. The secondary molded body 40 is thereby heated from the upper end portion side of the engagement elements 20. At this time, the heating temperature of the second heating roller 84 with which the engagement elements 20 are brought into contact is set to a temperature that is lower than the heating temperature of the first heating roller 83 and that is less than 100°C. Consequently, when the secondary molded body 40 passes through the second heating roller 84, the temperature of the secondary molded body 40 at the lower surface of the tentative base portion 10a is highest, and a temperature difference in the up-down direction is generated such that the temperature becomes lower from the lower surface of the tentative base portion 10a toward the upper end portions of the engagement elements 20.

After the secondary molded body 40 passes through the second heating roller 84, the secondary molded body 40 is subjected to uniaxial stretching processing 92 in which the secondary molded body 40 is stretched in the machine direction MD between the second heating roller 84 and the stretching roller 85 that rotates at a faster rotational speed than the second heating roller 84. At this time, the rotational speed of the stretching roller 85 is set to a speed that is more than or equal to 110% and less than or equal to 200%, preferably, more than or equal to 140% and less than or equal to 170% with respect to the rotational speed of the second heating roller 84. Consequently, the tensile force of pulling in the machine direction MD can be stably applied between the second heating roller 84 and the stretching roller 85 to the secondary molded body 40.

In the uniaxial stretching processing 92 in the present example, a temperature difference, such as that described above, in the up-down direction is generated in the secondary molded body 40 that has passed through the second heating roller 84. Consequently, in the secondary molded body 40 that is transported from the second heating roller 84 toward the stretching roller 85, the tentative base portion 10a can be more easily deformed than the engagement elements 20. Therefore, the stretching processing in which the tentative base portion 10a of the secondary molded body 40 is elongated in the machine direction MD can be performed with respect to the secondary molded body 40 that is transported from the second heating roller 84 to the stretching roller 85. It is thereby possible to stretch the tentative base portion 10a in the machine direction MD and cause the thickness of the base portion 10 to be thinner than the thickness of the tentative base portion 10a that is after the secondary molding step. In addition, it is possible to form the low position portion 12 at the base portion 10 by setting a decreasing rate (the decreasing rate to the thickness of the base portion 10 after secondary molding) of the thickness of the base portion 10 at portions disposed between the engagement elements 20 to be larger than a decreasing rate of the thickness of the base portion 10 at portions at which the engagement elements 20 are disposed. Meanwhile, since a movement of the synthetic resin does not easily occur at portions of the base portion 10 to which the engagement elements 20 are connected, the expand portions 13 expanding downward further than the low position portions 12 can be formed, on the base portion 10, at positions where the engagement elements 20 are formed. Further, since thermal deformation is suppressed, compared with in the base portion 10, in the engagement elements 20 whose temperature is lower than the base portion 10, it is possible to suppress or prevent a decrease in the height dimension of each of the engagement elements 20 due to the stretching processing of the base portion 10.

Further, in the uniaxial stretching processing 92 in the present example, as a result of a temperature difference in the up-down direction being provided in the secondary molded body 40, a temperature difference is also provided between the upper surface and the lower surface of the tentative base portion 10a. Consequently, when the tentative base portion 10a of the secondary molded body 40 is stretched, the upper surface of the tentative base portion 10a and the vicinity thereof are not easily deformed in the width direction (orthogonal direction CD). As a result, the shape of the tentative base portion 10a is easily restrained. Therefore, although deformation in which a tentative base portion shrinks in the orthogonal direction CD orthogonal to the machine direction MD occurs in, for example, a related art when uniaxial stretching processing in the machine direction MD is performed on the tentative base portion, it is possible in the present example, since thermal deformation at the upper surface of the tentative base portion 10a and in the vicinity thereof is suppressed, to suppress or prevent shrinkage of the tentative base portion 10a in the orthogonal direction CD due to the stretching of the tentative base portion 10a.

Further, the stretching roller 85 in the present example rotates while being in contact with the lower surface of the tentative base portion 10a of the secondary molded body 40. At this time, the heating temperature of the stretching roller 85 is set to be higher than or equal to the temperature that is lower by 30°C than the melting point of the synthetic resin and to be lower than or equal to the temperature that is lower by 15°C than the melting point of the synthetic resin. It is thus possible to more effectively suppress or prevent a decrease in the height dimension of each of the engagement elements 20 and shrinkage of the tentative base portion 10a in the width direction.

After the secondary molded body 40 passes through the stretching roller 85, the stretched secondary molded body 40 is subjected to alleviation processing 93. In this alleviation processing 93, the stretched secondary molded body 40 is transported, in a state in which the tensile force that is applied to the secondary molded body 40 is weakened, between the stretching roller 85 and the alleviation roller 86 that rotates at a slower rotational speed than the stretching roller 85. Thus, the shape of the stretched secondary molded body 40 can be stabilized between the stretching roller 85 and the alleviation roller 86.

When the alleviation roller 86 in the present example is to be rotated while the alleviation roller 86 is in contact with the engagement elements 20 of the secondary molded body 40, the heating temperature of the alleviation roller 86 is set to be higher than or equal to the room temperature and to be lower than or equal to the temperature that is lower by 90°C than the melting point of the synthetic resin. In particular, the heating temperature of the alleviation roller 86 is preferably set to be lower than or equal to 80°C. By thus setting the heating temperature of the alleviation roller 86 with which the engagement elements 20 come into contact to be lower than or equal to the temperature that is lower by 90°C than the melting point of the synthetic resin, it is possible to more effectively suppress or prevent a decrease in the height dimension of each of the engagement elements 20 due to a stress applied from the alleviation roller 86.

Thereafter, the secondary molded body 40 that has passed through the alleviation roller 86 is delivered to the outside from the discharge portion, which is not illustrated, of the stretching device 80.

By performing the stretching step, such as that described above, on the secondary molded body 40, it is possible to deform the tentative base portion 10a of the secondary molded body 40 into the base portion 10. As a result, the surface fastener 1 in the present example 1 illustrated in Fig. 1 to Fig. 3 is manufactured.

Note that the surface fastener 1 discharged from the stretching device 80 is wound into a roll form and collected around, for example, a collection roller or the like. The surface fastener 1 may be collected after being transported from the stretching device 80 toward a cutting portion, which is not illustrated, and being cut at the cutting portion to a predetermined width dimension and/or length dimension.

By being subjected to the uniaxial stretching processing in the machine direction MD performed by the stretching device 80, the low position portions 12 are stably provided at the base portion 10 in the surface fastener 1 in the present example manufactured as described above. It is thus possible in the surface fastener 1 in the present example to cause the thickness of the base portion 10 to be thin compared with, for example, a surface fastener in the related art on which the stretching processing is not performed. Therefore, as described above, effects such as an improvement in flexibility, a weight reduction, an improvement in productivity, and a reduction in manufacturing costs due to a reduction in the thickness of the base portion 10 can be obtained in the surface fastener 1 in the present example.

In addition, according to the present example, the heating temperature of the second heating roller 84 is set to be lower than the heating temperature of the first heating roller 83 in the stretching step of the secondary molded body (pre-fastener body) 40. Consequently, a temperature difference in the up-down direction is generated in the secondary molded body 40, and the uniaxial stretching process 92 can be performed with respect to the secondary molded body 40 provided with the temperature difference. It is thus possible, when the tentative base portion 10a is stretched, to suppress or prevent a decrease in the height dimension of each of the engagement elements 20, as described above, and to suppress or prevent shrinkage and thinning of the base portion 10 in the orthogonal direction CD.

In particular, the heating temperature of the second heating roller 84 with which the upper surfaces of the engagement elements 20 come into direct contact is set in the stretching step to be less than 100°C in the present example. In addition, the heating temperature of the stretching roller 85 with which the lower surface of the tentative base portion 10a comes into direct contact is set to be higher than or equal to the temperature that is lower by 30°C than the melting point of the synthetic resin and to be lower than or equal to the temperature that is lower by 15°C than the melting point of the synthetic resin.
Further, the heating temperature of the alleviation roller 86 is set to be lower than or equal to the temperature that is lower by 90°C than the melting point of the synthetic resin (in particular, the heating temperature is set to be lower than or equal to 80°C). When such a stretching condition is defined as a first stretching condition, it is possible by performing the stretching step under this first stretching condition to cause the movement of the resin from the engagement elements 20 to the tentative base portion 10a to more hardly occur when the tentative base portion 10a is stretched in the machine direction MD and possible to suppress or prevent a decrease in the height dimension of each of the engagement elements 20 more effectively. As a result, the height dimension of each of the engagement elements 20 can be controlled by the cavity shape of the die wheel 61, which is a metal mold in the primary molding step, and by the deformed amount of each of the primary elements in the secondary molding step. Note that the heating temperature of the stretching roller 85 may be set to be lower than or equal to a temperature that is lower by 25°C than the melting point of the synthetic resin and may be set to be lower than or equal to the temperature that is lower by 30°C than the melting point of the synthetic resin under the first stretching condition to effectively suppress the decrease in the height dimension of each of the engagement elements 20.

Meanwhile, instead of the above-described first stretching condition or in addition to the first stretching condition being satisfied, a second stretching condition in which the heating temperature of the second heating roller 84 is set to be higher than or equal to the temperature that is lower by 100°C than the melting point of the synthetic resin and to be lower than or equal to the temperature that is lower by 70°C than the melting point of the synthetic resin and in which the heating temperature of the stretching roller 85 is set to be higher than or equal to the temperature that is lower by 30°C than the melting point of the synthetic resin may be employed in the stretching step in the present example. Further, under this second stretching condition, the heating temperature of the second heating roller 84 is preferably set to a temperature that is less than 100°C and that is lower than or equal to a temperature that is lower by 40°C than the heating temperature of the stretching roller 85. In addition, the heating temperature of the alleviation roller 86 is preferably set to be lower than or equal to the heating temperature of the stretching roller 85.

By performing the stretching step under the second stretching condition such as that described above, it is possible, when the tentative base portion 10a is stretched in the machine direction MD, to cause the upper surface of the tentative base portion 10a and the vicinity thereof not to be easily deformed in the orthogonal direction CD and possible to more easily restrain the shape of the tentative base portion 10a in the orthogonal direction CD. It is thus possible to more effectively suppress or prevent shrinkage and thinning of the tentative base portion 10a in the orthogonal direction CD due to stretching of the tentative base portion 10a in the machine direction MD. As a result, it is possible to cause inconvenience, such as a decrease in the amount of production due to thinning of the base portion 10 of the surface fastener 1, an increase in the manufacturing costs, and an increase in the consumption rate of materials, not to occur easily.

Note that, in the above-described example, the pre-fastener body 40, which is the secondary molded body 40, is manufactured by performing the primary molding step in which the molding device 60 is used and the secondary molding step in which the heating-pressing device 70 is used. However, the method and means for molding the pre-fastener body on which the stretching processing is performed is not particularly limited in the present invention. In the present invention, for example, the pre-fastener body on which the stretching processing is performed may be manufactured, without performing the secondary molding step in which thermal deformation such as that in the above-described example is generated, by performing a molding step by a molding device provided with a cavity with which an engagement element including a stem portion and an engagement head portion can be molded.

### Reference Signs List

- 1: surface fastener
- 10: base portion
- 10a: tentative base portion
- 11: recessed surface portion
- 12: low position portion
- 13: expand portion
- 14: lower-surface-side straight line
- 15: upper-surface-side straight line
- 16: stem imaginary line
- 17: intersection point of stem imaginary line and upper-surface-side straight line
- 18: intersection point of stem imaginary line and lower-surface-side straight line
- 20: engagement element
- 21: engagement element row
- 22: stem portion
- 23: engagement head portion
- 24: engagement pawl portion
- 30: primary molded body
- 31: primary element (tentative element)
- 32: primary stem portion
- 33: rib portion
- 34: protruding portion (primary pawl portion)
- 40: secondary molded body (pre-fastener body)
- 50: manufacturing apparatus
- 60: molding device
- 61: die wheel
- 62: outer cylinder body (outer sleeve)
- 62a: through hole
- 63: inner cylinder body (inner sleeve)
- 63a: recessed groove portion
- 64: rotation drive roller
- 65: supply nozzle
- 66: pickup roller
- 66a: upper-side nipping roller
- 66b: lower-side nipping roller
- 70: heating-pressing device
- 71: upper-side pressing roller (upper-side calender roller)
- 72: lower-side pressing roller (lower-side calender roller)
- 80: stretching device
- 81: rotary roller
- 82: preheating roller
- 83: first heating roller
- 84: second heating roller
- 85: stretching roller
- 86: alleviation roller
- 91: heating processing
- 92: uniaxial stretching processing
- 93: alleviation processing
- CD: orthogonal direction
- MD: machine direction

## Claims

1. A surface fastener manufacturing method in which a surface fastener (1) made of a synthetic resin is manufactured, the surface fastener (1) including a base portion (10) and a plurality of engagement elements (20), the base portion (10) including a first surface and a second surface disposed opposite to each other, the plurality of engagement elements (20) protruding from the first surface of the base portion (10), **characterized in that** the surface fastener manufacturing method comprises:
a molding step of, with the synthetic resin that has melted, molding a pre-fastener body (40) including a tentative base portion (10a) and the engagement elements (20); and
a stretching step of obtaining the surface fastener (1) including the base portion (10) and the engagement elements (20) by stretching the pre-fastener body (40) between a second heating roller (84) and a stretching roller (85) in a machine direction (MD) by a stretching device (80) and thereby deforming the tentative base portion (10a) into the base portion (10), the stretching device (80) including at least three rotary rollers (81) that are arranged in the machine direction (MD), the rotary rollers (81) including a first heating roller (83), the second heating roller (84), and the stretching roller (85) that heat, while transporting the pre-fastener body (40), the pre-fastener body (40) obtained in the molding step, the stretching roller (85) being configured to rotate at a faster rotational speed than the second heating roller (84),
the stretching step including heating the tentative base portion (10a) with a second surface of the tentative base portion (10a) of the pre-fastener body (40) being in contact with the first heating roller (83), heating the engagement elements (20) with the engagement elements (20) of the pre-fastener body (40) being in contact with the second heating roller (84), and setting a heating temperature of the second heating roller (84) to be lower than a heating temperature of the first heating roller (83).

2. The surface fastener manufacturing method according to claim 1, **characterized in that** the molding step includes
a primary molding step of supplying the synthetic resin that has melted and molding a primary molded body (30) that includes the tentative base portion (10a) and a plurality of primary elements (31) protruding from a first surface of the tentative base portion (10a), and
a secondary molding step of molding, as the pre-fastener body (40), a secondary molded body (40) that includes the engagement elements (20) by pressing and deforming at least part of each of the primary elements (31) .

3. The surface fastener manufacturing method according to claim 1 or 2, **characterized in that** the stretching step includes
rotating an alleviation roller (86) provided on a downstream side of the stretching roller (85) at a slower rotational speed than the stretching roller (85),
bringing the engagement elements (20) of the pre-fastener body (40) into contact with the alleviation roller (86), and
setting a heating temperature of the alleviation roller (86) to be lower than or equal to a temperature that is lower by 90°C than a melting point of the synthetic resin.

4. The surface fastener manufacturing method according to claim 3, **characterized in that** the stretching step includes
setting the heating temperature of the second heating roller (84) to be less than 100°C, and
setting the heating temperature of the alleviation roller (86) to be less than or equal to 80°C.

5. The surface fastener manufacturing method according to claim 1 or 2, **characterized in that** the stretching step includes
setting a heating temperature of the stretching roller (85) to be higher than or equal to a temperature that is lower by 30°C than a melting point of the synthetic resin.

6. The surface fastener manufacturing method according to claim 5, **characterized in that** the stretching step includes
setting the heating temperature of the second heating roller (84) to be higher than or equal to a temperature that is lower by 100°C than the melting point of the synthetic resin and to be lower than or equal to a temperature that is lower by 70°C than the melting point of the synthetic resin.

7. The surface fastener manufacturing method according to claim 5 or 6, **characterized in that** the stretching step includes
setting the heating temperature of the second heating roller (84) to be less than 100°C and to be lower than or equal to a temperature that is lower by 40°C than the heating temperature of the stretching roller (85).

8. A surface fastener that is a surface fastener (1) made of a synthetic resin and including a base portion (10) and a plurality of engagement elements (20), the base portion (10) including a first surface and a second surface disposed opposite to each other, the plurality of engagement elements (20) protruding from the first surface of the base portion (10), **characterized in that**
the second surface of the base portion (10) includes a low position portion (12) and a plurality of expand portions (13) expanding in a direction away from the first surface with respect to the low position portion (12), and
the expand portions (13) are disposed at positions on a side of the second surface, the positions corresponding to positions of the engagement elements (20) provided at the first surface.

9. The surface fastener according to claim 8, **characterized in that**
the expand portions (13) each have a circular shape when the base portion (10) is viewed from the side of the second surface.

10. The surface fastener according to claim 8 or 9, **characterized in that**
a dimension of the base portion (10) at the low position portion (12) in a thickness direction is more than or equal to 65% and less than or equal to 85% of a maximum value of a dimension of the base portion (10) at the expand portions (13) in the thickness direction.

11. The surface fastener according to any one of claims 8 to 10, **characterized in that**
the base portion (10) has a connection region in which the base portion (10) and the engagement elements (20) are connected to each other, and
a formation region of the expand portions (13) at the second surface of the base portion (10) is provided such that, when the connection region is imaginarily disposed correspondingly on the side of the second surface of the base portion (10), the connection region imaginarily disposed on the side of the second surface is included in the formation region of the expand portions (13).
